Europäisches Patentamt

European Patent Office

Office européen des brevets

(11) Numéro de publication : **0 366 174 B1**

(12) **FASCICULE DE BREVET EUROPEEN**

(19)

(45) Date de publication du fascicule du brevet :
**30.12.92 Bulletin 92/53**

(21) Numéro de dépôt : **89202548.7**

(22) Date de dépôt : **10.10.89**

(51) Int. Cl.⁵ : **A01D 51/00**

(54) **Machine pour récolter des fruits ou analogues disposés au sol.**

(30) Priorité : **27.10.88 FR 8814248**

(43) Date de publication de la demande :
**02.05.90 Bulletin 90/18**

(45) Mention de la délivrance du brevet :
**30.12.92 Bulletin 92/53**

(84) Etats contractants désignés :
**DE ES GR IT**

(56) Documents cités :
**FR-A- 2 441 327**
**US-A- 3 057 143**
**US-A- 3 107 475**
**US-A- 3 698 169**
**US-A- 4 706 447**

(73) Titulaire : **Dreux, Maurice**
**Les Savignattes Esglottes**
**F-47120 Duras (FR)**

(72) Inventeur : **Dreux, Maurice**
**Les Savignattes Esglottes**
**F-47120 Duras (FR)**

(74) Mandataire : **Barre, Philippe et al**
**Cabinet Barre-Gatti-Laforgue 95 rue des**
**Amidonniers**
**F-31069 Toulouse Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne une machine pour récolter des fruits ou analogues répartis sur le sol. Elle s'applique en particulier pour récolter des fruits tels que prunes, noix, noisettes, pommes, etc... tombés sur le sol, mais peut s'étendre au recueil de tous objets analogues de formes arrondies, dispersés sur une surface. Pour simplifier la description, on utilisera par la suite le terme "fruits" qui doit donc être pris dans une acception plus générale : "fruits ou analogues".

On connaît un premier type de machines de ramassage mécanique, qui sont destinées à la récolte des fruits durs tels que les noix. Ces machines sont pourvues de peignes métalliques qui ratissent la surface, ce qui les rend totalement inadaptées pour la récolte de fruits plus fragiles tels que les prunes qui subiraient de graves dommages lors de ce ratissage mécanique.

Un autre type de machine utilise un puissant souffle d'air dirigé vers le sol pour assurer un transfert pneumatique des fruits vers un convoyeur. Toutefois, ce type de machines requiert une puissance pneumatique importante ; pour les fruits fragiles, elles entraînent sur sol sec des blessures de ceux-ci, cependant qu'en sol humide, elles sont le siège de bourrage rendant leur passage problématique. En outre, ces machines ont tendance à accentuer les irrégularités du sol en creusant les cuvettes et parties déjà en creux.

Il a également été proposé une machine comprenant une vis sans fin qui tourne au contact du sol en position oblique en vue de recueillir les fruits et de les amener vers un élévateur à tapis sans fin (brevet US 4 706 447). Toutefois, lors de l'avancement, une partie des fruits se trouve nécessairement écrasée par le tapis sans fin et les roues ; de plus, la vis sans fin entraîne également des risques d'écrasement au niveau de son hélice ainsi que des risques de détérioration des fruits lors du déplacement transversal de ceux-ci.

Par ailleurs a été proposé un type de machine dans lequel le ramassage des fruits était réalisé par des couples de brosses disposées en regard près du sol et tournant en sens inverse, de façon à pincer les fruits, à les soulever de bas en haut entre les deux brosses et à les entraîner vers un système de convoyage. Ce type de machine a été abandonné en raison de ses défauts incompatibles avec une exploitation satisfaisante : impossibilité de récolter les fruits dans les cuvettes, écrasement des fruits entre les brosses, récolte très problématique sur terrain humide.

La présente invention se propose de fournir une nouvelle machine de récolte qui permette de recueillir des fruits même fragiles sans les abîmer. Elle vise à fournir une machine permettant d'assurer une récolte totale des fruits aussi bien en terrain humide que sur sol sec.

A cet effet, la machine visée par l'invention pour récolter des fruits ou analogues disposés sur le sol comprend :
- un bâti adapté pour être déplacé selon une direction,
- au moins un organe de projection tournant de forme allongée, porté par le bâti de façon à être situé au voisinage du sol en direction oblique par rapport à la direction de déplacement,
- des moyens d'entraînement en rotation de chaque organe de projection, aptes à animer sa périphérie d'un mouvement assurant la projection des fruits vers l'avant,
- un tapis de réception porté par le bâti et ayant un brin actif situé du côté du bord arrière d'un ou d'organes de projection de façon à s'étendre audessous et au-delà de ceux-ci,
- des moyens d'entraînement du tapis de réception, aptes à conférer à son brin actif un sens de défilement opposé au sens de déplacement du bâti,
- et des moyens de convoyage des fruits du tapis de réception vers un conteneur.

La machine conforme à la présente invention se caractérise en ce qu'elle comprend une première ligne d'organes de projection, dits organes avant, répartis sur une largeur prédéterminée avec un recouvrement de leurs bords à l'exception de deux passages agencés pour entraîner la formation de deux andains, et une seconde ligne comprenant deux organes de projection, dits organes arrière, situés à l'arrière de chacun des passages, le tapis de réception étant situé entre lesdits organes arrière de façon à coopérer avec les bords desdits organes et à être masqué à l'arrière d'organes de la première ligne, le bâti étant porté par des moyens de déplacement tels que roues, eux-mêmes positionnés de façon à être masqué à l'arrière d'organes de projection avant.

Selon un mode de réalisation préféré, chaque organe de projection est constitué par une brosse tournant autour d'un axe parallèle au sol avec un sens de rotation tel que la partie avant de la brosse se déplace de bas en haut. Ladite brosse est avantageusement disposée en position oblique par rapport à sa direction de déplacement de façon à assurer l'accumulation des fruits vers le bord de la brosse qui est situé le plus arrière (par rapport à cette direction de déplacement).

Ainsi, selon l'invention, les fruits sont refoulés à l'avant d'organes tournants qui les amènent à rouler sur le sol jusqu'à former une accumulation linéaire (andain) qui est entraînée par la surface de réception. Une telle machine ne fait plus appel à un jet pneumatique et se trouve donc affranchi de tous les défauts afférents ; de plus, le refoulement de chaque fruit par simple contact avec un organe tournant tel qu'une brosse peut être réalisé sans blesser celui-ci, contrairement au procédé de ratissage par peignes qui endommage les fruits fragiles ou au procédé d'éjection entre deux brosses qui les écrase. Les organes de projection avant réalisent un premier travail d'accumulation des fruits en deux andains, qui permet ensuite aux deux organes de projection arrière de refouler la totalité de ceux-ci sur la surface de réception. Cette surface de réception et les roues de la machine sont disposées dans l'alignement et à l'arrière des organes de projection avant de façon à se déplacer sur un sol déjà balayé, sans risque d'écrasement de fruits. En outre, cette disposition en plusieurs organes de projection indépendants permet de couvrir une large bande de terrain (notamment la demi-largeur entre deux lignes d'arbres), tout en prévoyant des organes de projection de longueur réduite garantissant un positionnement correct de chaque organe au-dessus du sol à une distance inférieure au diamètre d'un fruit, et ce malgré les éventuelles irrégularités du terrain.

Selon une autre caractéristique de l'invention, la surface de réception sur laquelle sont recueillis les andains est constituée par un tapis sans fin ayant un brin actif s'étendant sur le sol, parallèlement à la direction de déplacement, au niveau du bord d'un ou d'organes de projection ; ce tapis est animé d'un mouvement de défilement l'amenant à rouler sans glisser sur le sol avec un sens de défilement opposé au sens de déplacement des organes de projection. Ainsi, les fruits qui roulent sur le sol le long des organes de projection passent de façon naturelle et sans heurt sur le tapis en arrivant près du bord de cet organe, puisque le brin actif dudit tapis ne subit aucun glissement par rapport au sol et paraît donc arrêté par rapport à celui-ci (constituant en quelque sorte un prolongement du sol en parfaite continuité avec celui-ci). Le tapis se referme sur lui-même par un brin ascendant, un brin de retour supérieur et un brin descendant. Les fruits entraînés grâce à des godets transversaux le long du brin ascendant sont ensuite déversés en partie haute sur des moyens de convoyage qui les transportent vers le conteneur.

Par ailleurs, chaque organe de projection est avantageusement constitué par une brosse formée de poils fixés sur un axe horizontal associé à un moteur hydraulique d'entraînement. Selon une autre caractéristique de la machine, chaque brosse et son moteur hydraulique sont portés par un support articulé sur le bâti en vue d'être mobile verticalement et horizontalement ; ce support est pourvu d'un patin d'appui sur le sol qui en ajuste la hauteur et permet à la brosse concernée de suivre les éventuelles irrégularités du sol à une hauteur appropriée pour refouler la totalité des fruits et éviter un contact direct avec le sol.

Selon une autre caractéristique de la machine, le tapis de réception comprend un châssis porté par un dispositif de relevage hydraulique adapté pour permettre de le déplacer verticalement ; ce châssis est assujetti audit dispositif de relevage par une double articulation autour d'un axe longitudinal et autour d'un axe transversal de façon à pouvoir pivoter transversalement et d'avant en arrière. Cette double articulation confère au tapis dont le brin actif repose sur le sol, une double liberté de mouvement lui permettant d'épouser les irrégularités du sol et de recueillir de façon satisfaisante les fruits refoulés par les brosses, même sur un sol très irrégulier.

La machine agricole conforme à l'invention peut être associée à un tracteur ou, au contraire, être autonome et posséder son moteur propre et quatre roues motrices et directrices. Dans cette dernière version qui sera préférée en pratique, le conteneur de stockage des fruits est situé à l'arrière et les moyens de convoyage comprennent, avantageusement, une trémie de réception disposée dans l'angle formé par le brin ascendant et le brin supérieur du tapis de façon à recueillir les fruits déversés au changement de direction, un court convoyeur transversal agencé pour recevoir les fruits recueillis dans ladite trémie et pour les acheminer transversalement, un convoyeur longitudinal agencé pour recevoir les fruits à l'extrémité du convoyeur transversal et pour les transporter jusqu'au conteneur arrière, et des moyens d'entraînement desdits convoyeur transversal et convoyeur longitudinal.

L'invention ayant été exposée dans sa forme générale, la description qui suit en référence aux dessins annexés en illustre une forme de réalisation ; sur ces dessins qui font partie intégrante de la présente description :

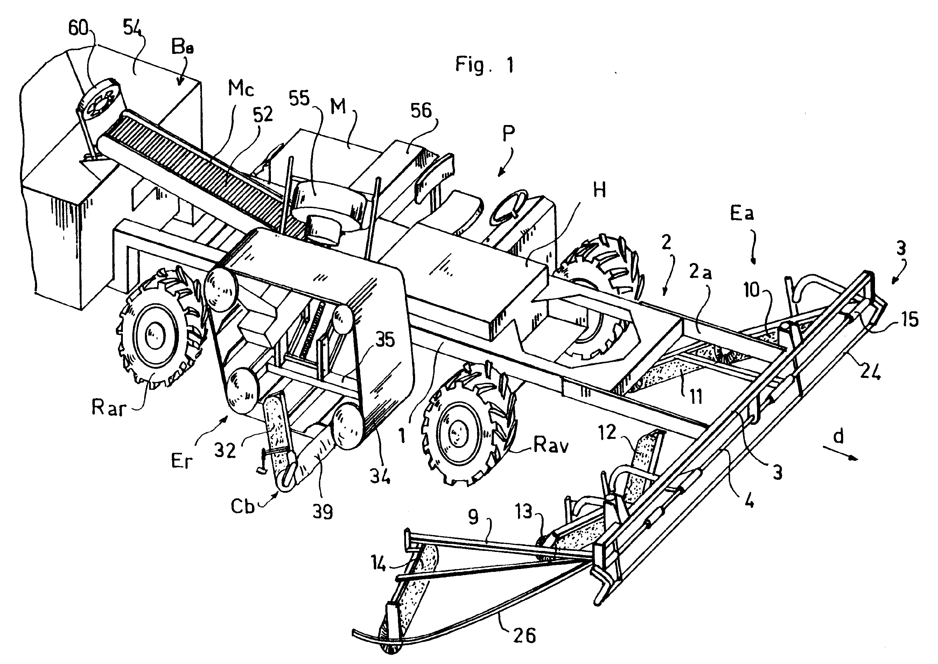

- la figure 1 est une vue d'ensemble en perspective d'une machine de récolte conforme à l'invention,
- la figure 2 en est une vue schématique en plan,
- la figure 3 est une vue partielle en perspective de la partie avant de la machine, portant les cinq organes de projection avant,
- les figures 4 et 5 sont des vues de détail montrant le montage d'une brosse de projection et de son patin d'appui sur le sol, respectivement en coupe transversale selon A et en coupe arrière selon B,
- la figure 6 est une vue en perspective par l'arrière montrant le montage de la brosse latérale escamotable,
- la figure 7 est une vue de détail de dessus des deux brosses arrière coopérant avec le tapis de réception,
- la figure 8 est une coupe transversale partielle selon C montrant le tapis de réception, ses moyens de relevage et les brosses arrière,
- la figure 9 est une coupe longitudinale selon D du même ensemble,
- la figure 10 est une coupe longitudinale partielle montrant le convoyeur longitudinal et le conteneur arrière,
- la figure 11 est une vue schématique illustrant le procédé de récolte mis en oeuvre.

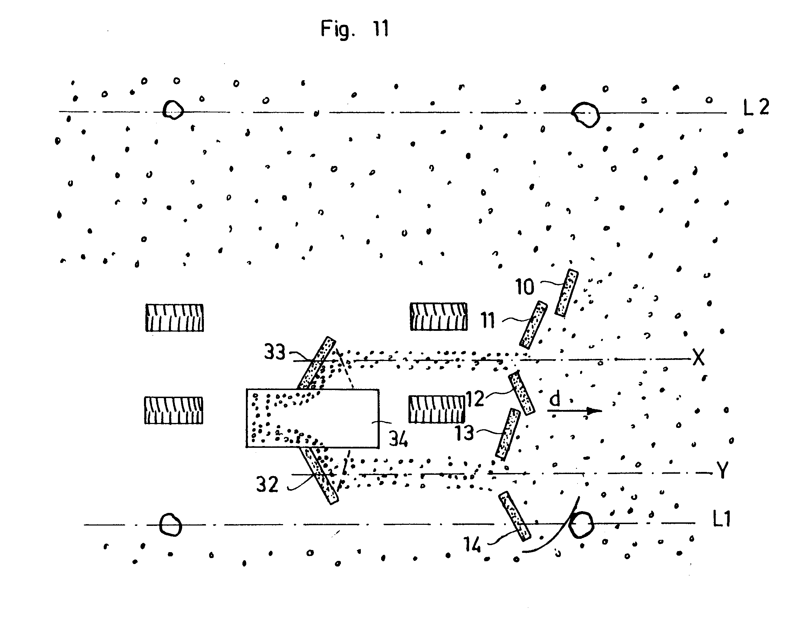

La machine agricole représentée à titre d'exemple aux figures est destinée à la récolte de fruits tombés à terre, notamment fruits fragiles tels que prunes, dans des plantations d'arbres alignés. Elle est dimensionnée pour permettre de récolter en deux passages les fruits répartis entre deux lignes d'arbres, telles que symbolisées en $L_1$ et $L_2$ sur le schéma de la figure 11.

Cette machine comprend un bâti 1 du type bâti de tracteur qui est doté des divers équipements classiques pour le rendre auto-moteur et autonome : moteur thermique M, poste de pilotage P, quatre roues motrices et directrices $R_{AV}$ et $R_{AR}$, centrale hydraulique et son réservoir H, entraînée par le moteur... Sur ce bâti sont montés plusieurs ensembles spécifiques de l'invention que l'on aperçoit sur les figures d'ensembles 1 et 2, et qui sont décrits en détail plus loin : essentiellement un ensemble avant à cinq brosses $E_A$ destiné à réaliser un premier travail d'accumulation en deux andains, un couple de brosses arrière $C_B$ reprenant ces deux andains et coopérant avec un ensemble de réception à tapis $E_R$, des moyens de convoyage $M_C$ des fruits recueillis par l'ensemble de réception et un conteneur arrière Be.

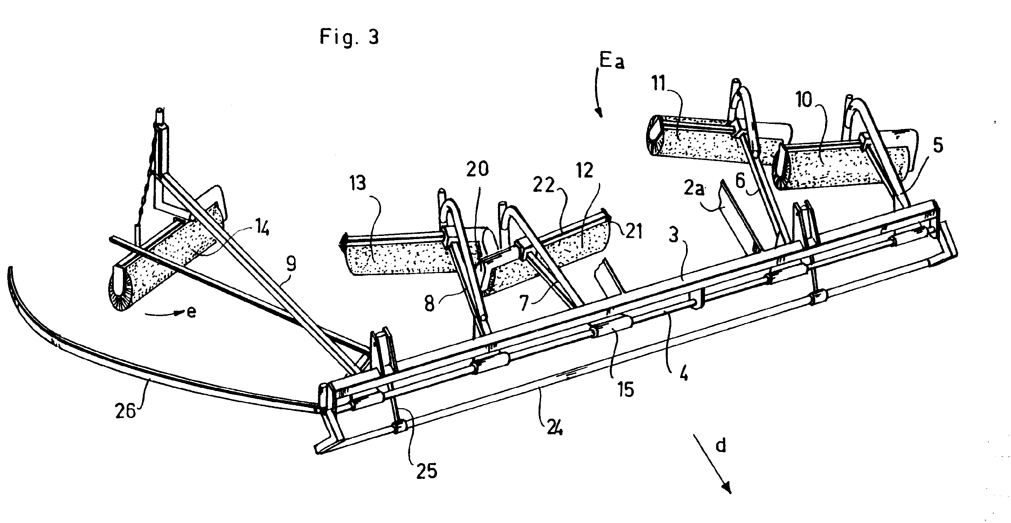

L'ensemble avant $E_A$ qui est représenté en détail aux figures 3, 4, 5 et 6 est porté par un châssis 2 qui est fixé sur le bâti 1 et comporte, à l'avant de longerons 2a, une membrure transversale 3. Cette membrure porte une tige inférieure horizontale 4 autour de laquelle sont articulés cinq supports de brosses : deux supports latéraux gauches 5, 6 portant deux brosses latérales 10 et 11, deux supports centraux 7 et 8 portant deux brosses centrales 12 et 13, et un support latéral droit 9 portant une brosse latérale escamotable 14. Chaque support de brosse est articulé sur la tige 4 par un manchon tel que 15 de façon à être mobile verticalement.

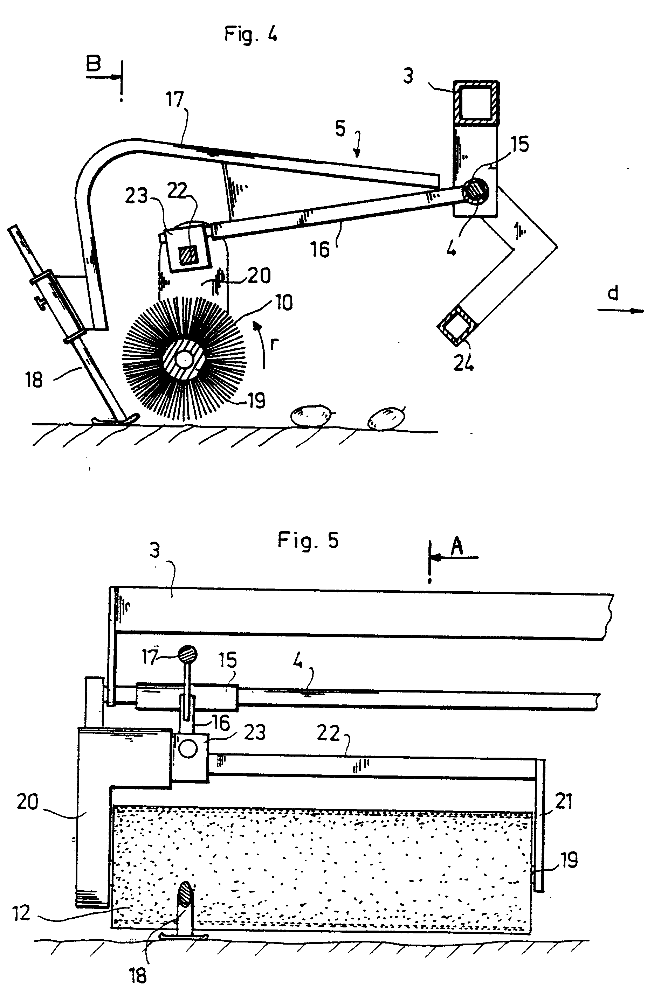

Les supports 5, 6, 7 et 8 sont analogues et représentés en détail aux figures 4 et 5. Chacun comprend, d'une part, une barre-support 16 de direction approximativement longitudinale à l'extrémité de laquelle est fixée, par l'entremise d'une articulation 23, la brosse et son moteur hydraulique, d'autre part, une crosse 17 solidarisée à la barre-support 16 et portant un patin 18 de hauteur réglable situé à l'arrière de la brosse concernée.

Chaque brosse est constituée par une multitude de poils radiaux, notamment en matière synthétique anti-usure, leur conférant un caractère semi-rigide, ces poils étant fixés sur un axe 19. Cet axe est accouplé à une extrémité à un moteur hydraulique 20 et porté à son extrémité opposée par une chape 21 qui se prolonge par une barre 22 se refermant sur le carter du moteur hydraulique. La barre 22 porte l'articulation 23 qui permet à l'ensemble brosse/moteur de pivoter autour de l'axe de la barre-support 16 de façon à être mobile au-dessus du sol dans un plan transversal. L'équilibre de l'ensemble est prévu de façon que chaque brosse en position de travail se trouve sensiblement horizontale au-dessus du sol à une hauteur constante ajustée par le patin 18 ; cette hauteur peut être réglée pour être de l'ordre de 1/3 D à 1/2 D, où D est le diamètre des fruits à récolter (par exemple, hauteur d'environ 1,5 cm pour des prunes de diamètre de l'ordre de 3 à 4 cm). La brosse suit le sol et ses éventuelles irrégularités à hauteur constante par pivotement autour de la tige transversale 4 sous l'action du patin 18. De plus, en cas d'irrégularité locale non détectée par le patin, elle peut s'effacer par le jeu de l'articulation 23.

En outre, la machine est équipée de moyens de relevage hydrauliques permettant de déplacer verticalement l'ensemble des supports de brosses avant entre la position de travail près du sol et une position relevée (position route). Ces moyens sont en l'exemple constitués par une barre de relevage 24, articulée aux extrémités de la tige 4 et sur laquelle viennent s'atteler deux vérins hydrauliques tels que 25 (figure 3), permettant de rabattre cette barre 24 vers l'arrière : dans ce mouvement, ladite barre de relevage vient au contact des barres-supports 16 et soulève celles-ci.

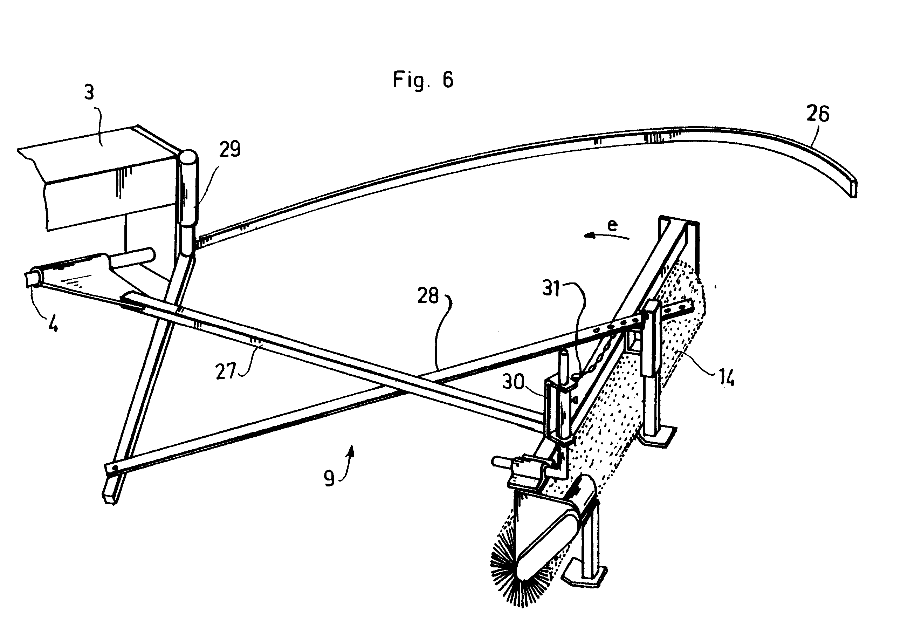

La brosse escamotable 14 représentée à la figure 6 est supportée par des moyens analogues à l'exception des caractéristiques suivantes qui la rendent escamotable en présence d'un tronc d'arbre. En premier lieu, elle est munie d'une barre cintrée 26 formant palpeur. De plus, elle est associée à une biellette supplémentaire 28 en vue de l'actionner dans un mouvement d'effacement. Cette biellette porte à son extrémité arrière le patin d'appui de la brosse et l'ensemble palpeur 26/biellette 28 est articulé sur la barre 3 par un pivot vertical 29 qui lui donne la liberté de pivoter transversalement lorsque le palpeur 26 vient au contact d'un tronc. La barre-support de brosse 27 porte la brosse 14 par l'intermédiaire d'une articulation supplémentaire 30 autour d'un axe vertical afin d'autoriser le pivotement de ladite brosse. Une chaîne 31 retient l'ensemble lors des relevages vers la position route.

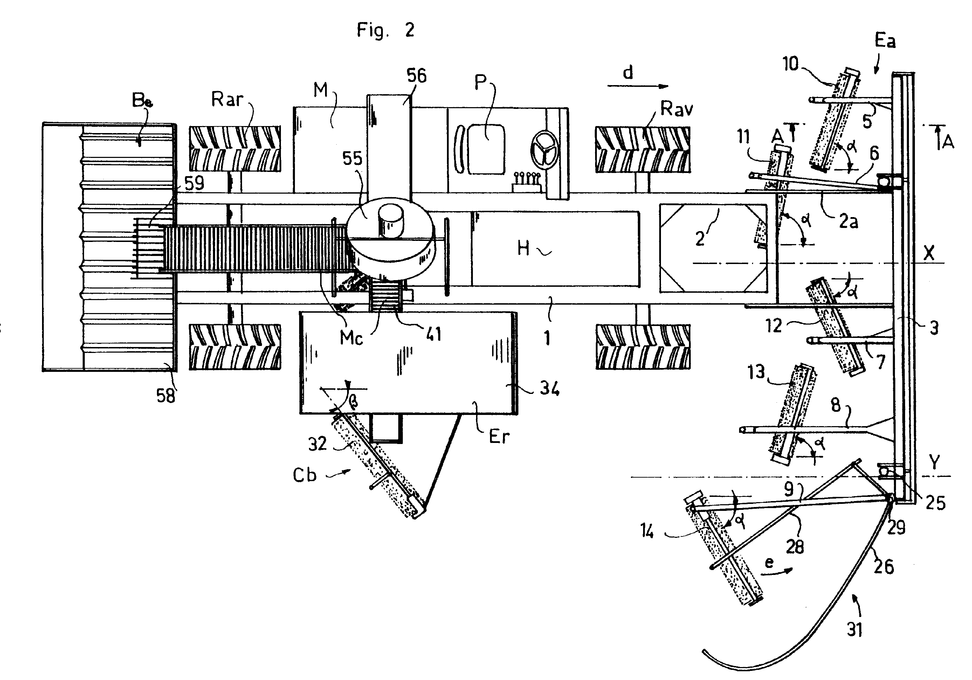

Comme le montre notamment la figure 2, les deux brosses latérales 10 et 11 sont agencées avec une obliquité $\alpha$ par rapport à la direction longitudinale qui est de même sens pour ces deux brosses et qui est tournée vers une ligne longitudinale X. Ces deux brosses se recouvrent au niveau de leurs bords contigus.

Les deux brosses centrales 12 et 13 sont agencées avec des obliquités inverses l'une par rapport à l'autre, l'obliquité de la brosse 12 étant tournée vers la ligne X et l'obliquité de la brosse 13 vers une ligne Y située de l'autre côté. Ces deux brosses se recouvrent au niveau de leurs bords contigus et sont, au contraire, écartées des brosses voisines (respectivement brosse 11 et brosse 14) pour préserver deux passages le long des lignes X et Y.

La brosse latérale escamotable 14 présente une oblicité tournée vers la ligne Y.

L'angle d'oblicité α de ces diverses brosses est en valeur absolue sensiblement le même, compris entre 50° et 80°, et en particulier de l'ordre de 70° pour ces brosses avant.

Les moteurs hydrauliques des brosses sont alimentés par la centrale hydraulique H de la machine et adaptés pour pouvoir assurer un entraînement des brosses en rotation dans une plage de vitesse comprise entre 200 et 400 tours/minute ; le sens de la rotation est tel que les poils situés à l'avant possèdent un mouvement ascendant (flèche r dessinée à la figure 4).

Lorsque la machine avance dans la direction indiquée par les flèches -d- aux figures (vitesse d'avancement de 1 à 5 km/h), les brosses avant 10-14 refoulent les fruits sur la largeur de la machine et réalisent deux andains le long des lignes X et Y. Le refoulement est engendré par les impulsions que donnent les poils sur chaque fruit au cours de leur rotation, impulsions qui amènent les fruits à rouler sur le sol pour s'accumuler le long des deux seuls passages X et Y existant sur la largeur de la machine. Les éléments arrière de la machine qui viennent au contact du sol (roues, tapis) sont bien entendu positionnés en dehors de ces lignes d'accumulations. En particulier les deux roues gauches sont situées à l'arrière des brosses latérales 10 et 11 afin d'être masquées par celles-ci, cependant que les roues droites et le tapis sont positionnés à l'arrière des brosses centrales 12 et 13 et masqués par celles-ci. Il est à noter que l'escamotage de la brosse latérale 14 s'effectue dans le sens de la flèche -e- dessinée aux figures (tendance à diminuer l'angle α), de sorte que les fruits sont toujours refoulés vers la ligne Y.

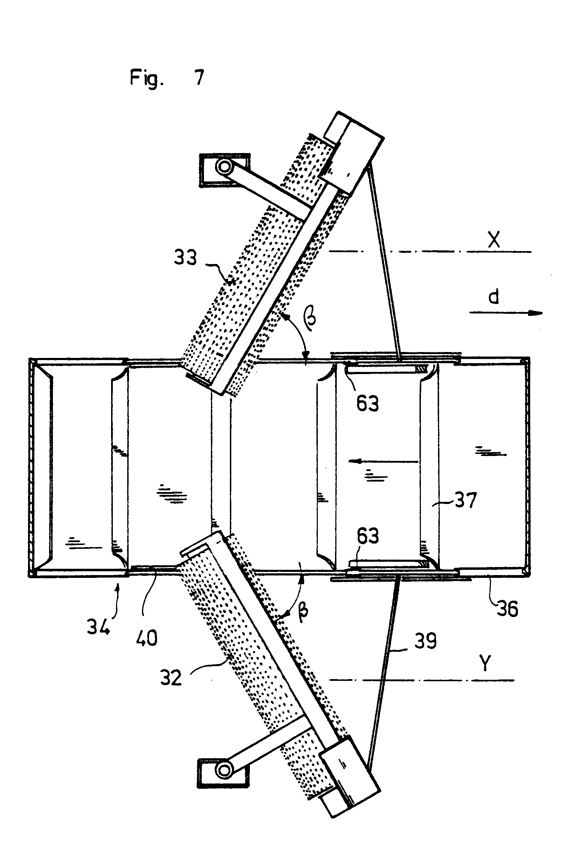

Par ailleurs, la machine comprend, à l'arrière de l'ensemble ci-dessus décrit, deux brosses arrière 32 et 33 qui coopèrent avec un tapis de réception 34. Ces moyens sont représentés en détail aux figures 7, 8 et 9, respectivement en vue de dessus simplifiée, en coupe transversale et en coupe longitudinale.

Chaque brosse arrière 32 ou 33 est identique aux brosses avant, entraînée de la même façon par un moteur hydraulique et dotée d'un patin d'appui. Ces brosses arrière sont portées de part et d'autre du tapis de réception 34 par le châssis de ce dernier avec des obliquités inverses de façon que les fruits soient refoulés vers le tapis. L'angle d'oblicité β de ces brosses par rapport à la direction de déplacement est le même en valeur absolue et est compris entre 35° et 65°, et en particulier de l'ordre de 55°.

Ces brosses arrière 32 et 33 sont disposées selon les lignes X et Y de façon à refouler la totalité des fruits accumulés par les brosses avant le long de ces deux lignes.

Le tapis de réception est doté d'un châssis 35 constitué de deux montants et d'un longeron, reliant quatre axes transversaux qui portent huit poulies de guidage et d'entraînement du tapis telles que 36. Ces poulies coopèrent avec des nervures latérales entre lesquelles s'étend le tapis. Celui-ci possède des réglettes transversales de rétention des fruits telles que 37 qui forment une pluralité de godets. De préférence, le fond de ces godets est ajouré par des lumières de dimensions adaptées pour permettre le passage de la terre et des corps étrangers, tout en retenant les fruits.

Le tapis guidé par les poulies 36 est formé de quatre brins : un brin actif inférieur 34i qui coopère avec les brosses 32 et 33, un brin ascendant 34a qui remonte les fruits vers une trémie de réception 38, un brin de retour supérieur 34s et un brin descendant 34d.

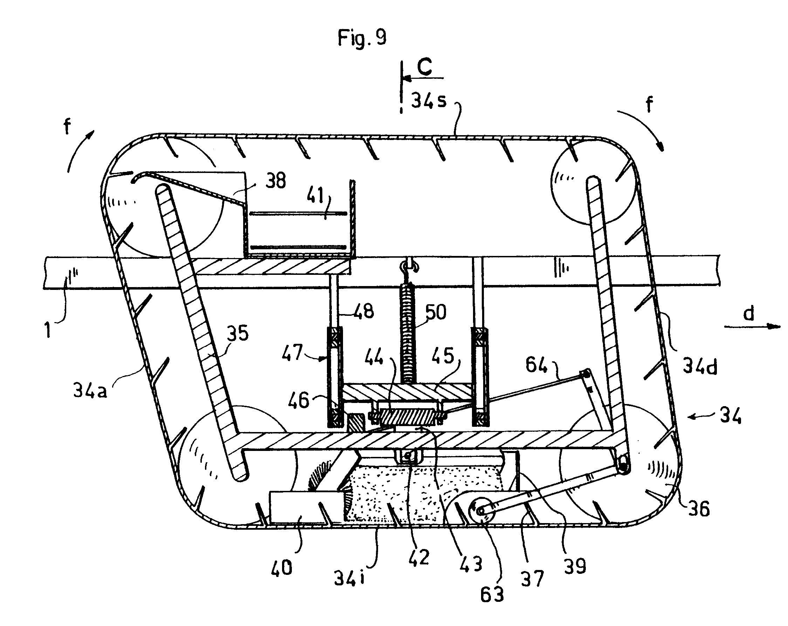

L'un des arbres qui portent deux poulies est entraîné en rotation par un moteur hydraulique (non représenté) adapté pour l'entraîner dans le sens des flèches f dessinées à la figure 9, tel que le brin actif 34i possède un sens de défilement opposé au sens de déplacement -d- du bâti, la vitesse relative de défilement du tapis par rapport au bâti étant égale en valeur absolue à la vitesse de déplacement de la machine de sorte que le brin actif 34i qui est appelé à reposer sur le sol en position travail roule sans glisser sur celui-ci. Deux galets tendeurs tels que 63 sont articulés sur l'arbre des poulies basses avant, afin d'appliquer le tapis sur le sol dans la zone où les fruits sont chargés sur celui-ci; ces galets tendeurs sont élastiquement sollicités par des tendeurs élastiques ou ressorts tels que 64.

Les brosses 32 et 33 sont portées par le châssis 35 du tapis par l'entremise d'une traverse 46 de sorte que lorsque le brin actif repose sur le sol, leurs poils passent à fleur de terre (1,5 à 2 cm comme les brosses avant pour des prunes). Le bord arrière de ces brosses chevauche les bordures latérales du tapis comme le montre la figure 7, de façon à guider les fruits jusque sur celui-ci. Les réglettes transversales 37 du tapis sont avantageusement échancrées en bordure afin de permettre la libre rotation des brosses sans usure excessive.

De plus, des bavettes souples telles que 39 sont avantageusement prévues de chaque côté du brin actif du tapis en vue de limiter la zone de projection des fruits. Chaque bavette 39 s'étend entre la partie avant du brin actif et le bord avant de la brosse correspondante (figure 7). A l'arrière de chaque brosse, une bavette souple de guidage 40 peut également être prévue pour éviter un débordement latéral des fruits, cependant que les poulies arrière présentent des flasques pleins dans le même but.

La trémie de réception 38 est assujettie sur une extension du châssis 35 et contient un court convoyeur transversal 41 pour le transfert des fruits déversés dans celle-ci. L'entrée de cette trémie est agencée pour s'étendre jusqu'à proximité des réglettes transversales 37 au niveau du changement de direction, de façon à recueillir la totalité des fruits qui se déversent.

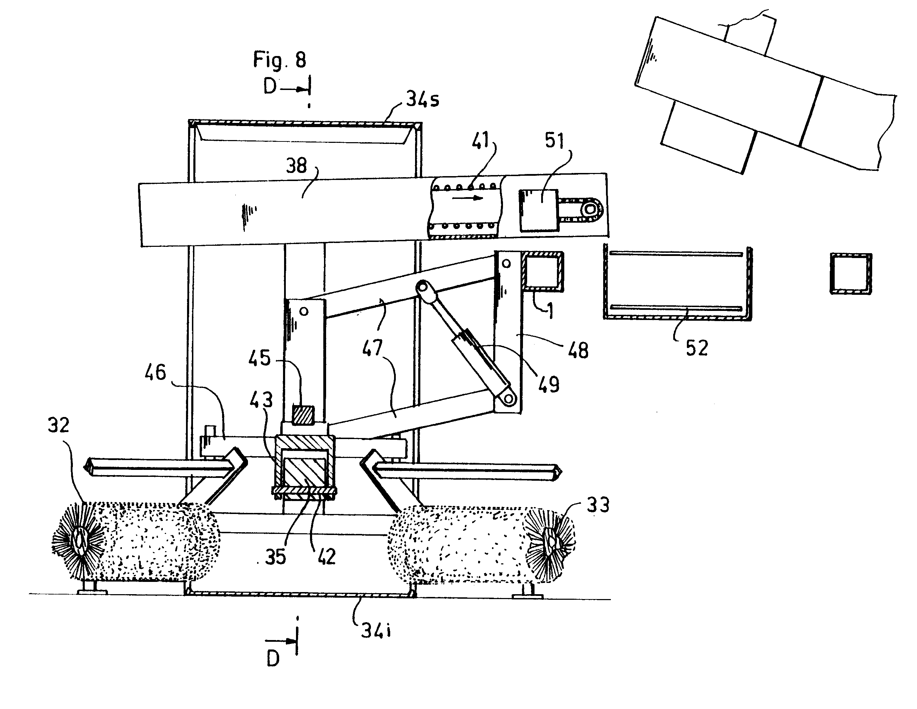

Le châssis 35 du tapis est porté par un dispositif de relevage hydraulique par l'entremise d'une double articulation comme le représentent les figures 8 et 9 respectivement en coupe transversale et coupe longitudinale. Le longeron du châssis 35 est d'abord articulé autour d'un axe transversal 42 qui est porté par une chape 43 ; cette chape 43 est à son tour articulée autour d'un axe longitudinal 44 qui est porté par un longeron 45.

Ce dernier est soutenu à ses extrémités par deux parallélogrammes déformables tels que 47 qui sont articulés sur deux montants tels que 48 soudés sur le bâti 1 de la machine. Deux vérins synchrones tels que 49 permettent de déplacer verticalement le longeron 45 afin de disposer le tapis de réception soit dans sa position de travail avec son brin actif sur le sol, soit dans une position relevée (position route). Un ressort compensateur 50 équilibre une partie du poids du tapis et réduit la force d'appui du tapis sur le sol. La double articulation longitudinale (axe 44) et transversale (axe 42) par laquelle est suspendu le châssis du tapis sous le longeron 45 donne au tapis la faculté de pivoter transversalement et d'avant en arrière, et lui permet d'épouser parfaitement le sol.

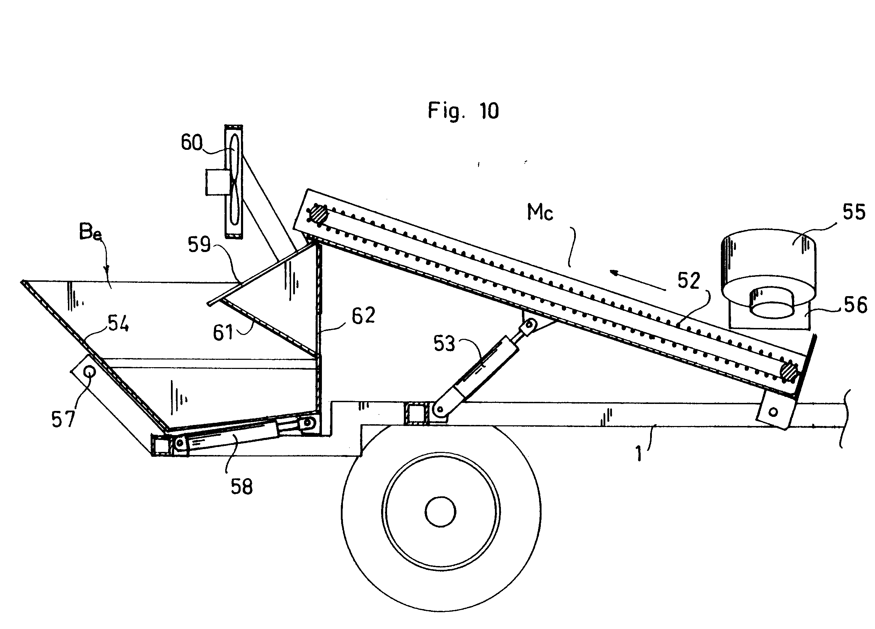

Par ailleurs, le convoyeur transversal 41 est entraîné par un moteur hydraulique 51 et déverse les fruits sur le côté du tapis sur un convoyeur longitudinal 52 qui est en particulier représenté à la figure 10. Ce convoyeur 52 est entraîné par un moteur hydraulique (non visible) ; il est articulé sur le bâti 1 et porté par un vérin 53 qui permet de le disposer soit dans une position de travail avec son extrémité arrière située au-dessus d'un conteneur 54 (figure 10), soit dans une position relevée afin de libérer le volume au-dessus dudit conteneur pour le vidage de celui-ci.

Dans la zone de déversement entre les deux convoyeurs 41 et 52, sont disposés des moyens d'aspiration 55, de type classique, qui aspirent les corps étrangers et les rejettent par une gaine 56 sur le côté de la machine.

Le conteneur arrière 54 est articulé à l'arrière du châssis par des broches 57 et un vérin 58 permet de le faire basculer pour vider la récolte.

Ce conteneur comporte une grille vibrante 59 qui est située sous l'extrémité arrière du convoyeur longitudinal 52 lorsque celui-ci est dans sa position de travail. Cette grille est formée de barreaux espacés de façon à retenir les fruits et à laisser passer la terre. En l'exemple, elle est amenée à vibrer grâce à un ventilateur 60 qui la surmonte et dont on a déséquilibré la rotation en réduisant le poids d'une pale (ou en supprimant l'une d'elles). A l'aplomb de la grille, le conteneur comprend des moyens d'évacuation de la terre, constitués en l'exemple par une trémie 61 et une ouverture 62.

Le schéma de la figure 11 représente la machine en cours de récolte. Elle progresse selon la direction -d- près d'une ligne d'arbres $L_1$ et couvre une largeur légèrement supérieure à la demi-largeur entre deux lignes d'arbres. Par des impulsions exercées sur chaque fruit au cours de leur rotation, les cinq brosses avant 10-14 font rouler les fruits sur le sol et les refoulent le long des deux lignes X et Y formant deux andains qui sont repris par les brosses arrière 32 et 33. Celles-ci dirigent les fruits sur le tapis 34 dont le brin actif est posé sur le sol avec une vitesse relative nulle par rapport à celui-ci. Les fruits sont ensuite convoyés vers le conteneur arrière, via le tapis, le convoyeur transversal et le convoyeur longitudinal. Ils sont débarrassés de la terre et des corps étrangers à trois niveaux : d'une part, dans les godets ajourés du tapis, ensuite par l'action de l'aspiration 55, enfin en arrivant sur la grille vibrante 59.

La machine conforme à l'invention permet de réaliser une récolte totale sans dommage des fruits même fragiles.

**Revendications**

1. Machine agricole pour la récolte de fruits ou analogues disposés au sol, comprenant :
   - un bâti (1) adapté pour être déplacé selon une direction (d),
   - au moins un organe de projection tournant (10-14, 32, 33) de forme allongée, porté par le bâti de façon à être situé au voisinage du sol en direction oblique par rapport à la direction de déplacement (d),
   - des moyens (20) d'entraînement en rotation de chaque organe de projection, aptes à animer sa périphérie d'un mouvement (r) assurant la projection des fruits vers l'avant,
   - un tapis de réception (34) porté par le bâti et ayant un brin actif (34i) situé du côté du bord arrière d'un ou d'organes de projection de façon à s'étendre au-dessous et au-delà de ceux-ci,
   - des moyens d'entraînement du tapis de réception, aptes à conférer à son brin actif (34a) un sens de défilement (f) opposé au sens de déplacement du bâti,
   - et des moyens (41, 52) de convoyage des fruits du tapis de réception vers un conteneur (54),
   
   ladite machine étant caractérisée en ce qu'elle comprend une première ligne d'organes de projection, dits organes avant (10-14), répartis sur une largeur prédéterminée avec un recouvrement de leurs bords à l'exception de deux passages (X, Y) agencés pour entraîner la formation de deux andains, et une seconde ligne comprenant deux organes de projection, dits organes arrière (32, 33), situés à l'arrière de chacun des passages, le tapis de réception (34) étant situé entre lesdits organes arrière de façon à coopérer avec les bords desdits organes et à être masqué à l'arrière d'organes de la première ligne (12, 13), le bâti (1) étant porté par des moyens de déplacement tels que roues, eux-mêmes positionnés de façon à être masqué à l'arrière d'organes de projection avant (10-13).

2. Machine selon la revendication 1, caractérisée en ce que chaque organe de projection (10-14, 32, 33) est constitué par une brosse formée de poils fixés sur un axe parallèle au sol (19) accouplé à un moteur hydraulique d'entraînement (20).

3. Machine selon la revendication 2, dans laquelle chaque brosse et son moteur hydraulique sont portés par un support (7, 16) articulé sur le bâti en vue d'être mobile verticalement et horizontalement, ledit support étant pourvu d'un patin (18) adapté pour venir en appui avec le sol en vue d'ajuster la hauteur de celui-ci.

4. Machine selon la revendication 3, comprenant des moyens de relevage hydrauliques (24, 25) adaptés pour permettre de déplacer verticalement les supports de brosse.

5. Machine selon l'une des revendications 2, 3 ou 4, caractérisée en ce que chaque moteur hydraulique de brosse (20) est adapté pour pouvoir assurer un entraînement en rotation dans une plage de vitesse comprise entre 200 et 400 tours/minute.

6. Machine selon l'une des revendications 2, 3, 4 ou 5, dans laquelle chaque brosse (10-14, 32, 33) est disposée de façon que son angle ($\alpha$, $\beta$) par rapport à la direction longitudinale de déplacement soit compris entre 35° et 80°.

7. Machine selon l'une des revendications 1 à 6, caractérisée en ce qu'elle comprend au moins quatre organes de projection avant :
. deux organes centraux (12, 13) positionnés avec un recouvrement de leurs bords contigus, ces organes ayant des obliquités inverses tournées respectivement vers deux lignes longitudinales (X) et (Y) situées de part et d'autre de ceux-ci,
. au moins un organe latéral (10, 11), écarté des organes centraux pour former un des passages précités et dont l'obliquité est tournée vers une des lignes longitudinales (X),
. et, situé de l'autre côté, au moins un organe latéral (14), écarté des organes centraux pour former l'autre passage et dont l'obliquité est tournée vers l'autre ligne longitudinale (Y),

. le tapis de réception (34) étant situé à l'arrière des deux organes centraux (12, 13).

8. Machine selon la revendication 7, caractérisée en ce qu'elle comprend, d'un côté, deux organes latéraux (10, 11) se recouvrant et d'obliquité identique et, de l'autre côté, un organe latéral unique (14) agencé pour pouvoir s'escamoter en présence d'un tronc d'arbre, le bâti (1) possédant quatre roues, deux situées à l'arrière des deux organes centraux (12, 13) et les deux autres situées à l'arrière des deux organes latéraux se recouvrant (10, 11).

9. Machine selon la revendication 8, caractérisée en ce que l'organe de projection escamotable (14) est articulé par son support de façon à pouvoir pivoter transversalement (e) et est associé à une barre cintrée (26) formant palpeur, apte à engendrer le pivotement dudit organe au contact d'un tronc d'arbre.

10. Machine selon l'une des revendications 1 à 9, caractérisée en ce que les moyens d'entraînement du tapis de réception sont adaptés pour amener le brin actif du tapis (34a) à rouler sans glisser sur le sol.

11. Machine selon l'une des revendications 1 à 10, caractérisée en ce que le tapis de réception (34) est doté de deux bavettes souples (39) situées de chaque côté de son brin actif (34i), chaque bavette s'étendant entre la partie avant dudit brin et le bord avant d'un organe de projection arrière (32, 33) en vue de limiter la zone de projection des fruits.

12. Machine selon l'une des revendications 1 à 11, dans laquelle le tapis de réception (34) comprend quatre brins : un brin actif inférieur (34i), un brin ascendant (34a), un brin de retour supérieur (34s) et un brin descendant (34d), lesdits brins étant guidés et entraînés par des poulies (36) associées à un moteur hydraulique, ledit tapis étant adapté pour former des godets transversaux de rétention des fruits, ajourés par des lumières pour le passage de la terre et des corps étrangers.

13. Machine selon la revendication 12, caractérisée en ce que le tapis de réception comprend un châssis (35) porté par un dispositif de relevage hydraulique (47-49) adapté pour permettre de le déplacer verticalement, ledit châssis étant assujetti audit dispositif de relevage par une double articulation autour d'un axe longitudinal (44) et autour d'un axe transversal (42) de façon à pouvoir pivoter transversalement et d'avant en arrière.

**14.** Machine selon l'une des revendications 12 ou 13, caractérisée en ce que les moyens de convoyage comprennent une trémie de réception (38) disposée dans l'angle formé par le brin ascendant (34a) et le brin supérieur (34s) du tapis de façon à recueillir les fruits déversés au changement de direction, un court convoyeur transversal (41) agencé pour recevoir les fruits recueillis dans ladite trémie et pour les acheminer transversalement, un convoyeur longitudinal (52) agencé pour recevoir les fruits à l'extrémité du convoyeur transversal et pour les transporter jusqu'à un conteneur (54) situé à l'arrière, et des moyens d'entraînement desdits convoyeur transversal et convoyeur longitudinal.

**15.** Machine selon la revendication 14, caractérisée en ce qu'elle comprend des moyens d'aspiration (55) aptes à aspirer les corps étrangers entre le convoyeur transversal (41) et le convoyeur longitudinal (52).

**16.** Machine selon l'une des revendications 14 ou 15, caractérisée en ce que le conteneur (54) comporte une grille vibrante (59) située sous l'extrémité du convoyeur longitudinal (52) et adaptée pour retenir les fruits et laisser passer la terre, ledit conteneur comprenant à l'aplomb de ladite grille des moyens d'évacuation (61, 62) en vue de l'élimination de la terre.

**17.** Machine selon l'une des revendications 1 à 16, possédant son moteur propre et quatre roues motrices et directrices.

**Claims**

**1.** Agricultural machine for harvesting fruits or similar products lying on the ground, comprising :
- a frame (1) so designed as to be displaced in a direction (d),
- at least one rotary projection device (10-14, 32, 33) of elongated shape, carried by the frame so as to be located close to the ground at an angle to the direction of displacement (d),
- means (20) for driving each projection device in rotation, said means being so designed as to impart to the periphery of said projection device a movement (r) ensuring forward projection of the fruits,
- a take-up band (34) carried by the frame and having an active part (34i) located near the rear edge of one projection device or of projection devices so as to extend below and beyond said projection devices,
- means for driving the take-up band so designed as to cause its active part (34i) to revolve in a direction (f) opposite to the direction in which the frame is displaced,
- and means (41, 52) for conveying the fruits from the take-up band to a container (54), said machine being characterised in that it comprises a first row of projection devices, the so-called frontal devices (10-14), distributed over a predetermined width with their edges overlapping except for two passages (X, Y) so arranged as to bring about the formation of two windrows, and a second row comprising two projection devices, the so-called rear devices (32, 33), situated at the rear of each of said passages, whereby take-up band (34) is situated between said rear devices so as to co-operate with the edges of said devices while being screened at the rear of first-row devices (12, 13), frame (1) being carried by means for displacement such as wheels, themselves positioned in such a way as to be screened at the rear of frontal projection devices (10-13).

**2.** Machine according to claim 1, characterised in that each projection device (10-14, 32, 33) is constituted by a brush consisting of bristles attached to a spindle (19) parallel to the ground and coupled with a hydraulic driving motor (20).

**3.** Machine according to claim 2, in which each brush and its hydraulic motor are carried by a support (7, 16) articulated to the frame with a view to being vertically and horizontally mobile, said support being provided with a foot (18) so designed as to rest on the ground with a view to adjusting its height.

**4.** Machine according to claim 3, comprising hydraulic lifting means (24, 25) so designed as to enable the brush supports to be displaced vertically.

**5.** Machine according to one of claims 2, 3 or 4, characterised in that each hydraulic brush motor (20) is so designed as to be capable of ensuring rotational driving within a speed range comprised between 200 and 400 revolutions/minute.

**6.** Machine according to one of claims 2, 3, 4 or 5, in which each brush (10-14, 32, 33) is arranged in such a way that its angle ($\alpha$, $\beta$) in respect of the longitudinal direction of displacement is comprised between 35° and 80°.

**7.** Machine according to one of claims 1 to 6, characterised in that it comprises at least four frontal projection devices, as follows :

. two central devices (12, 13) positioned with their adjacent edges overlapping, said devices having inverse inclinations facing respectively towards two longitudinal lines (X) and (Y) situated on either side of said devices,
. at least one lateral device (10, 11) at a distance from the central devices so as to form one of the above-mentioned passages, said device being so inclined as to face towards one of the longitudinal lines (X),
. and, situated on the other side, at least one lateral device (14), at a distance from the central devices so as to form the other passage, said device being so inclined as to face towards the other longitudinal line (Y),
. with take-up band (34) being situated at the rear of the two central devices (12, 13).

8. Machine according to claim 7, characterised in that it comprises, on one side, two lateral devices (10, 11) which overlap and are inclined in the same direction and, on the other hand, a single lateral device (14) so designed as to be capable of being retracted in the presence of a tree trunk, with frame (1) having four wheels, two situated at the rear of these two central devices (12, 13) and the other two situated at the rear of the two overlapping lateral devices (10, 11).

9. Machine according to claim 8, characterised in that retractable projection device (14) is articulated by its support so as to be capable of pivoting transversely (e) and is associated with a curved bar (26) constituting a sensing device so designed as to cause, on contact with a tree trunk, pivoting of said device.

10. Machine according to one of claims 1 to 9, characterised in that the means for driving the take-up band are so designed as to cause the active part of the band (34i) to revolve without sliding on the ground.

11. Machine according to one of claims 1 to 10, characterised in that take-up band (34) is endowed with two flexible hold-off plates (39) situated on either side of its active part (34i), whereby each hold-off plate extends between the front section of said part and the front edge of a rear projection device (32, 33) so as to limit the fruit-projection zone.

12. Machine according to one of claims 1 to 11, in which take-up band (34) comprises four parts, i.e. a lower active part (34i), an ascending part (34a), an upper returning part (34s) and a descending part (34d), said parts being guided and driven by pulleys (36) associated with a hydraulic motor, whereby said band is so designed as to form transverse fruit-retaining compartments perforated with holes for passing earth and foreign bodies.

13. Machine according to claim 12, characterised in that the take-up band comprises a chassis (35) carried by a hydraulic lifting device (47-49) so designed as to enable it to be displaced vertically, said chassis being connected with said lifting device by a double articulation about a longitudinal spindle (44) and about a transverse spindle (42) so as to be capable of pivoting transversely and from front to rear.

14. Machine according to one of claims 12 or 13, characterised in that the conveying means comprise a reception hopper (38) arranged within the angle formed by ascending part (34a) and upper part (34s) of the band so as to gather the fruits spilled when changing direction, a short transverse conveyor (41) so arranged as to receive the fruits gathered in said hopper and so as to convey them transversely, a lengthwise conveyor (52) arranged to receive the fruits at the end of the transverse conveyor and to transport them as far as the container (54) situated at the rear, as well as means for driving said transverse conveyor and said lengthwise conveyor.

15. Machine according to claim 14, characterised in that it comprises aspiration means (55) so designed as to aspirate the foreign bodies between transverse conveyor (41) and lengthwise conveyor (52).

16. Machine according to one of claims 14 or 15, characterised in that container (54) comprises a vibrating grid (59) situated below the end of lengthwise conveyor (52) and so designed as to retain the fruits while letting earth pass through, said container comprising directly below said grid evacuation means (61, 62) with a view to getting rid of earth.

17. Machine according to one of claims 1 to 16, having its own motor and four driven and steered wheels.

## Patentansprüche

1. Landwirtschaftliche Maschine zum Ernten von Früchten oder ähnlichen auf dem Boden liegenden Produkten, umfassend :
   - einen Rahmen (1), der so beschaffen ist, daß er sich in Richtung (d) verlagern läßt,
   - mindestens eine sich drehende Schleudervorrichtung (10-14, 32, 33) länglicher Form, die so an dem Rahmen angebracht ist, daß sie sich in Bodennähe und zwar schräg zu der Verlagerungsrichtung (d) befindet,

- Mittel (20) zu drehendem Antrieb jeder Schleudervorrichtung, die so beschaffen sind, daß sie deren Umfang eine Bewegung (r) vermitteln, die Vorwärtsschleudern der Früchte bedingt,

- ein an dem Rahmen angebrachtes Aufnahmeband (34) mit einem aktiven Trum (34i) an der Seite des Hinterrands von einer Schleudervorrichtung oder Schleudervorrichtungen, so daß es sich unterhalb der besagten Vorrichtungen und jenseits von diesen erstreckt,

- Mittel zum Antrieb des Aufnahmebandes, die so beschaffen sind, daß sie dessen aktivem Trum (34i) eine Umlaufrichtung (f) vermitteln, die der Verlagerungsrichtung des Rahmens entgegengesetzt ist,

- und Mittel (41, 52) zum Fördern der Früchte von dem Aufnahmeband zu einem Behälter (54),

wobei die besagte Maschine dadurch gekennzeichnet ist, daß sie eine erste Reihe von Schleudervorrichtungen, die sogenannten vorderen Vorrichtungen (10-14), umfaßt, die so über eine bestimmte Breite verteilt sind, daß deren Ränder mit Ausnahme von zwei zwecks Bildung von zwei Schwaden vorgesehenen Bahnen (X, Y) überlappen, sowie eine zweite Reihe mit zwei Schleudervorrichtungen, den sogenannten hinteren Vorrichtungen (32, 33), die sich am hinteren Ende jeder der besagten Bahnen befinden, während Aufnahmeband (34) zwischen den besagten hinteren Vorrichtungen angeordnet ist, so daß es mit den Rändern der besagten Vorrichtungen zusammenarbeitet und hinter den Vorrichtungen der ersten Reihe (12, 13) abgeschirmt ist, und Rahmen (1) durch Verlagerungsmittel wie Räder getragen wird, wobei die besagten Räder so angeordnet sind, daß sie hinter den vorderen Schleudervorrichtungen (10-13) abgeschirmt sind.

2. Maschine nach Anspruch 1, dadurch gekennzeichnet, daß jedes Schleuderorgan (10-14, 32, 33) aus einer Bürste besteht, die durch an einer zum Boden parallelen Spindel (19) angebrachte Borsten gebildet ist, wobei die besagte Spindel mit einem hydraulischen Antriebsmotor (20) gekoppelt ist.

3. Maschine nach Anspruch 2, bei der jede Bürste und deren Hydraulikmotor an einer an einem Rahmen gelenkig angebrachten Stütze (7, 16) so angeordnet sind, daß sie sich in senkrechter und waagerechter Richtung verlagern lassen, wobei die besagte Stütze mit einem Fuß (18) versehen ist, der auf dem Boden aufgesetzt werden kann, um deren Höhe einzustellen.

4. Maschine nach Anspruch 3, umfassend hydraulische Hebemittel (24, 25), die so beschaffen sind, daß sie senkrechte Verlagerung der Bürstenstützen gestatten.

5. Maschine nach einem der Ansprüche 2, 3 oder 4, dadurch gekennzeichnet, daß jeder hydraulische Bürstenmotor (20) so beschaffen ist, daß er drehenden Antrieb innerhalb einer Drehzahlspanne zwischen 200 und 400 Umdrehungen/Minute gewährleisten kann.

6. Machine nach einem der Ansprüche 2, 3, 4 oder 5, bei der jede Bürste (10-14, 32, 33) so angeordnet ist, daß ihr Winkel ($\alpha$, $\beta$) im Verhältnis zu der Längsverlagerungsrichtung zwischen 35° und 80° beträgt.

7. Maschine nach einem der Ansprüche 1 bis 6, dadurch gekennzeichnet, daß sie mindestens vier vordere Schleudervorrichtungen umfaßt,

. und zwar zwei mittlere Vorrichtungen (12, 13), die so angeordnet sind, daß ihre anschließenden Ränder einander überlappen, wobei die besagten Vorrichtungen entgegengesetzte Neigungen in Richtung der beiden Längslinien (X) bzw. (Y) zu beiden Seiten der besagten Vorrichtungen aufweisen,

. mindestens eine seitliche Vorrichtung (10, 11), die von den mittleren Vorrichtungen entfernt ist, so daß eine der besagten Bahnen entsteht, wobei die besagte seitliche Vorrichtung in Richtung einer der Längslinien (X) geneigt ist,

. und an der anderen Seite mindestens eine seitliche Vorrichtung (14), die von den mittleren Vorrichtungen entfernt ist, so daß die andere Bahn gebildet wird, wobei die besagte Vorrichtung in Richtung der anderen Längslinie (Y) geneigt ist,

. während Aufnahmeband (34) hinter den beiden mittleren Vorrichtungen (12, 13) angeordnet ist.

8. Maschine nach Anspruch 7, dadurch gekennzeichnet, daß sie einerseits zwei seitliche einander überlappende Vorrichtungen (10, 11) gleicher Neigung umfaßt, und andererseits eine einzige seitliche Vorrichtung (14), die so angeordnet ist, daß sie sich in Gegenwart eines Baumstammes zurückziehen kann, wobei Rahmen (1) vier Räder, zwei hinter den beiden mittleren Vorrichtungen (12, 13) und die beiden anderen hinter den beiden seitlichen einander überlappenden Vorrichtungen (10, 11) aufweist.

9. Maschine nach Anspruch 8, dadurch gekennzeichnet, daß die rückziehbare Schleudervorrichtung (14) durch ihre Stütze gelenkig so angebracht ist, daß sie in Querrichtung (e) schwenkbar ist und mit einer ein Fühlorgan bildenden gekrümmten Stange (26) in Verbindung steht, die so beschaffen ist, daß sie bei Berührung eines Baumstamms Schwenken der besagten Vorrichtung bewirkt.

10. Maschine nach einem der Ansprüche 1 bis 9, dadurch gekennzeichnet, daß die Antriebsmittel des Aufnahmebandes so beschaffen sind, daß das aktive Trum des Bandes (34i) in Umlauf versetzt wird ohne auf dem Boden entlangzugleiten.

11. Maschine nach einem der Ansprüche 1 bis 10, dadurch gekennzeichnet, daß Aufnahmeband (34) mit zwei flexiblen Abhaltplatten (39) zu beiden Seiten seines aktiven Trums (34i) versehen ist, wobei sich jede Abhaltplatte zwecks Einschränkung des Fruchtschleuderbereichs zwischen dem vorderen Teil des besagten Trums und dem Vorderrand einer hinteren Schleudervorrichtung (32, 33) erstreckt.

12. Maschine nach einem der Ansprüche 1 bis 11, bei der Aufnahmeband (34) vier Trume - ein unteres aktives Trum (34i), ein Aufwärtstrum (34a), ein oberes Rücklauftrum (34s) und ein Abwärtstrum (34d) - umfaßt, wobei die besagten Trume durch mit einem hydraulischen Motor in Verbindung stehende Rollen (36) geführt und angetrieben werden, und zwar ist das besagte Band so beschaffen, daß es zum Zurückhalten der Früchte Querbecher bildet, die mit Löchern zum Durchlaß der Erde und von Fremdkörpern versehen sind.

13. Maschine nach Anspruch 12, dadurch gekennzeichnet, daß das Aufnahmeband ein durch eine hydraulische Hebevorrichtung (47-49) getragenes Gestell (35) umfaßt, wobei die besagte Vorrichtung so beschaffen ist, daß sie senkrechte Verlagerung des besagten Gestells gestattet, und zwar ist das besagte Gestell mit der besagten Hebevorrichtung durch ein Doppelgelenk um eine Längsspindel (44) und um eine Querspindel (42) verbunden, so daß es in Querrichtung und von vorn nach hinten geschwenkt werden kann.

14. Maschine nach einem der Ansprüche 12 oder 13, dadurch gekennzeichnet, daß die Fördermittel einen Aufnahmebehälter (38) umfassen, der in dem durch Aufwärtstrum (34a) und das obere Trum (34s) des Bandes gebildeten Winkel angeordnet ist, so daß er die durch Ändern der Richtung verschütteten Früchte abfängt, sowie einen kurzen Querförderer (41), der so angeordnet ist, daß er die in den besagten Behälter abgefangenen Früchte aufnimmt und sie in Querrichtung leitet, einen Längsförderer (52), der so angeordnet ist, daß er die Früchte am Ende des Querförderers übernimmt und zu einem hinten befindlichen Behälter (54) befördert, und Antriebsmittel für den besagten Querförderer und den besagten Längsförderer.

15. Maschine nach Anspruch 14, dadurch gekennzeichnet, daß sie Ansaugmittel (55) umfaßt, die so beschaffen sind, daß sie die Fremdkörper zwischen Querförderer (41) und Längsförderer (52) ansaugen.

16. Maschine nach einem der Ansprüche 14 oder 15, dadurch gekennzeichnet, daß Behälter (54) ein unter dem Ende des Längsförderers (52) befindliches Rüttelgitter (59) umfaßt, das so beschaffen ist, daß es die Früchte zurückhält, die Erde aber durchläßt, wobei der besagte Behälter unmittelbar unterhalb des besagten Gitters zwecks Beseitigung der Erde Entleermittel (61, 62) umfaßt.

17. Maschine nach einem der Ansprüche 1 bis 16, mit eigenem Motor und vier Antriebsrädern und gelenkten Rädern.

Fig. 1

Fig. 2

Fig. 3

EP 0 366 174 B1

Fig. 4

Fig. 5

Fig. 6

Fig. 7

Fig. 8

Fig. 9

Fig. 10

EP 0 366 174 B1

Fig. 11